# EUROPÄISCHE PATENTSCHRIFT

(11) **EP 1 666 320 B1**
(45) Veröffentlichungstag und Bekanntmachung des Hinweises auf die Patenterteilung: **12.12.2012**
(21) Anmeldenummer: 05109692.3
(22) Anmeldetag: 18.10.2005
(51) Int. Cl.: B60S 1/40, B60S 1/38, B60S 1/34

(54) **Wischblatt**
Wiper blade
Balai d'essuie-glace

(30) Priorität: 06.12.2004 DE 102004058684
(43) Veröffentlichungstag der Anmeldung: 07.06.2006
(73) Patentinhaber: ROBERT BOSCH GMBH, 70442 Stuttgart (DE)
(72) Erfinder: Kraemer, Godelieve, 76549, Huegelsheim (DE)

(56) Entgegenhaltungen:
- WO-A-2004/024520
- DE-A1- 2 713 384
- DE-A1- 19 757 872
- US-A- 2 761 169

## Beschreibung

### Stand der Technik

Die Erfindung geht von einem Wischblatt nach dem Oberbegriff des Anspruchs 1 aus.

Aus der DE 197 57 872 A1 ist ein Scheibenwischer bekannt, dessen Wischarm an seinem freien Ende über eine Gelenkverbindung mit einem gelenkfreien Wischblatt nach Art einer Toplock-Verbindung lösbar verbunden ist. Die Gelenkverbindung besitzt ein erstes Kupplungsteil, das auf einem flachen, balkenförmigen, federelastischen Tragelement des Wischblatts befestigt ist und an seiner Frontseite eine Gelenkachse in Form zweier seitlich angeordneter Lagerzapfen besitzt. An seinem der Gelenkachse entgegengesetzten Ende hat das erste Kupplungsteil Gegenlagerflächen, die zur Gelenkachse weisen und mit Lagerflächen an einem zweiten Kupplungsteil ein Gegenlager bilden.

Das zweite Kupplungsteil besitzt an seiner Frontseite eine offene Nabe, die in seitlichen Führungswänden vorgesehen ist und in der die Lagerzapfen des ersten Kupplungsteils im montierten Zustand gelagert sind. Das zweite Kupplungsteil ist mit seinem zur offenen Nabe entgegengesetzten Ende an einem Wischarm befestigt. Die offene Nabe weist parallel versetzt zum Wischarm in Richtung seines freien Endes, sodass das am Wischblatt befestigte erste Kupplungsteil parallel zum Wischarm zwischen die seitlichen Führungswände des zweiten Kupplungsteils geschoben werden kann, bis die seitlichen Lagerzapfen an den Lagerflächen der offenen Nabe zur Anlage kommen. Während der Montage werden die zum Gegenlager gehörenden Lagerflächen, die an Federzungen des ersten Kupplungsteils seitlich nachgiebig angeordnet sind, nach innen gedrückt und stellen sich wieder elastisch nach außen in die alte Position zurück, sobald sie die korrespondierenden Lagerflächen an dem zweiten Kupplungsteil passiert haben. Das Gegenlager verhindert, dass die Lagerzapfen im montierten Zustand aus der offenen Nabe gedrückt werden können.

Ferner ist aus der DE 27 13 384 A1 ein Wischer für eine Fahrzeugscheibe, insbesondere für Fahrzeugscheinwerfer bekannt, dessen Wischblatt ein flaches, federelastisches Tragelement aufweist, das in seitlichen Nuten eines Gummiprofils einer Wischleiste eingesetzt ist. Etwa in der Mitte der Wischleiste ist an dem Tragelement eine Anschlussvorrichtung befestigt, mit der nach dem Sidelock-Prinzip ein Wischarm gelenkig verbunden werden kann. Hierzu besitzt der Wischarm, der als Federbalkenwischarm ausgebildet ist, an seinem freien Ende eine offene Lagerschale, die an einem flachen Teil des Wischarms angeformt ist, und im montierten Zustand eine quer zum Wischblatt verlaufende Lagerwalze der Anschlussvorrichtung umgreift. Die Lagerwalze ist seitlich der Wischleiste angeordnet und bildet mit einer zum freien Ende des Wischblatts versetzt angeordneten Lagerwalze eine Öffnung, durch die das Ende des Wischarms mit der Lagerschale von der Seite einer Wischlippe der Wischleiste geschoben und auf der Lagerwalze gelagert wird. Das Wischblatt wird in Längsrichtung des Wischarms gesichert, indem Absätze am Wischarm mit Führungsflächen an der der Lagerwalze zugeordneten Seite zusammenwirken. Diese besitzen eine koaxial zur Lagerwalze verlaufende Krümmung, sodass die Lagerschale über einen begrenzten Betriebswinkel nicht außer Eingriff geraten kann. Eine andere Möglichkeit zum axialen Fixieren besteht darin, dass die La-Ende des Wischarms mit der Lagerschale von der Seite einer Wischlippe der Wischleiste geschoben und auf der Lagerwalze gelagert wird. Das Wischblatt wird in Längsrichtung des Wischarms gesichert, indem Absätze am Wischarm mit Führungsflächen an der der Lagerwalze zugeordneten Seite zusammenwirken. Diese besitzen eine koaxial zur Lagerwalze verlaufende Krümmung, sodass die Lagerschale über einen begrenzten Betriebswinkel nicht außer Eingriff geraten kann. Eine andere Möglichkeit zum axialen Fixieren besteht darin, dass die Lagerschale die Lagerwalze in einem Umfangsbereich von mehr als 180 Grad umfasst und auf die Lagerwalze aufgeklippst wird. Die Seitenflächen des Wischarms und der Lagerschale sind zwischen Führungsflächen der Anschlussvorrichtung seitlich geführt, die über die Querschnittkontur der Lagerwalze entsprechend vorsteht und einen ausreichenden Schwenkwinkel während des Betriebs des Scheibenwischers zulässt.

Schließlich ist aus der US 2761169A ein Wischblatt bekannt, dessen Wischleiste ein Gummiprofil aufweist, das von einem geraden Tragelement zwischen zwei Seitenwänden gehalten wird, die durch eine Rückenwand miteinander verbunden sind. An dem Tragelement ist eine Anschlussvorrichtung befestigt, die mit ihren Seitenwänden die Seitenwände des Tragelements umfasst, wobei die Seitenwände der Anschlussvorrichtung einen quer zum Wischblatt verlaufenden Lagerbolzen tragen. Zwischen der Außenkontur des Lagerbolzens und einer Erhebung der Rückenwand des Tragelements wird das äußere Ende einer Wischstange geschoben, das zu einer den Lagerbolzen teilweise umfassenden Lagerschale gebogen ist. In montiertem Zustand stützt sich die äußere Kontur der Lagerschale an dem Vorsprung des Tragelements ab.

### Vorteile der Erfindung

Nach der Erfindung ist die Öffnung mit der Lagerwalze, die am antriebsseitigen Ende einer Frontwand vorgesehen ist und die Öffnung zum freien Ende des Wischblatts hin begrenzt, auf einer von der Fahrzeugscheibe abgewandten Seite der Wischleiste zwischen zwei Seitenwänden der Anschlussvorrichtung angeordnet. Auf der der Wischleiste zugewandten Seite der Lagerwalze ist im Abstand zu dieser eine Anlagefläche für die äußere Oberfläche der Lagerschale vorgesehen. Durch die erfindungsgemäße Gestaltung wird mit einfachen Mitteln eine flach bauende Toplock-Verbindung zwischen dem Wischblatt und dem Wischarm ermöglicht, wobei in der Betriebsstellung des Wischblatts die Kräfte in Längsrichtung des Wischarms über der Lagerwalze in den Zwischenraum zwischen der Anlagefläche und der Lagerwalze eingefädelt.

Die Anschlussvorrichtung kann aus einem einstückigen Kunststoffbauteil bestehen oder gemäß einer Ausgestaltung der Erfindung aus einem Anschlusselement, das z.B. als Blechkralle auf der Wischleiste befestigt ist, und einer mit dem Anschlusselement verbundenen Adapterkappe bestehen, die die Frontwand, die Lagerwalze und die Decke sowie die Seitenwände umfasst. Das Anschlusselement kann mit Krallen oder durch Schweißen, Kleben, Klemmen oder durch eine Klippverbindung auf der Wischleiste befestigt sein. Dabei kann die Anlagefläche von einem Teil eines Bodens des Anschlusselements oder der Adapterkappe oder einer aus beiden Teilen einstückig zusammengefassten Anschlussvorrichtung angeordnet sein.

Gemäß einer weiteren Ausgestaltung der Erfindung besitzt die Anschlussvorrichtung in ihrem Boden im Bereich der Lagerwalze eine bis zur Wischleiste reichende Öffnung, und die Anlagefläche ist an der Wischleiste vorgesehen. Dies hat den Vorteil, dass die Wandstärke des Bodens als Bauraum für die Lagerschale genutzt werden kann, und die Anschlussvorrichtung dadurch flacher wird. Ferner liegt die äußere Fläche nunmehr an dem gummielastischen Material des Gummiprofils der Wischleiste an, sodass die Lagerschale unter einer geringen Vorspannung spielfrei zwischen der Lagerwalze und der Wischleiste gehalten ist. Dadurch wird gleichzeitig dem Auftreten von Klappergeräuschen entgegengewirkt. Besteht die Anschlussvorrichtung aus einem Anschlusselement und einer Adapterkappe, sind in Seitenwänden der Adapterkappe zweckmäßigerweise Längsschlitze vorgesehen, die zur antriebsseitigen Stirnseite und zur Längsseite offen sind, die der Fahrzeugscheibe zugewandt ist. Bei der Montage wird das Anschlusselement mit seinen Seitenwänden in die Längsschlitze geschoben und darin verrastet. Hierzu sind an den Seitenwänden des Anschlusselements jeweils eine Ausbuchtung und ein Rastzapfen vorgesehen. Der äußere Teil der Seitenwände schützt das Anschlusselement und sorgt für ein harmonisches Design.

Zweckmäßigerweise ist die Lagerschale gegenüber dem flachen Ende des Wischarms zur Wischleiste hin gekröpft, wobei der Übergang durch eine ausgerundete Kehle gebildet wird. Die gegenüberliegende Kante der Decke ist entsprechend abgerundet. Dadurch gewinnt der Wischarm einen großen Bewegungsspielraum bei einer im Übrigen nach außen weitgehend geschlossenen Anschlussvorrichtung. Der Bewegungsspielraum wird außerdem noch dadurch verbessert, dass die Oberseite der Decke zur Antriebseite hin leicht abfällt und der nach innen weisende Schenkel der Decke an seiner der Lagerwalze zugewandten Seite einen spitzen Winkel mit der Anlagefläche einschließt.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

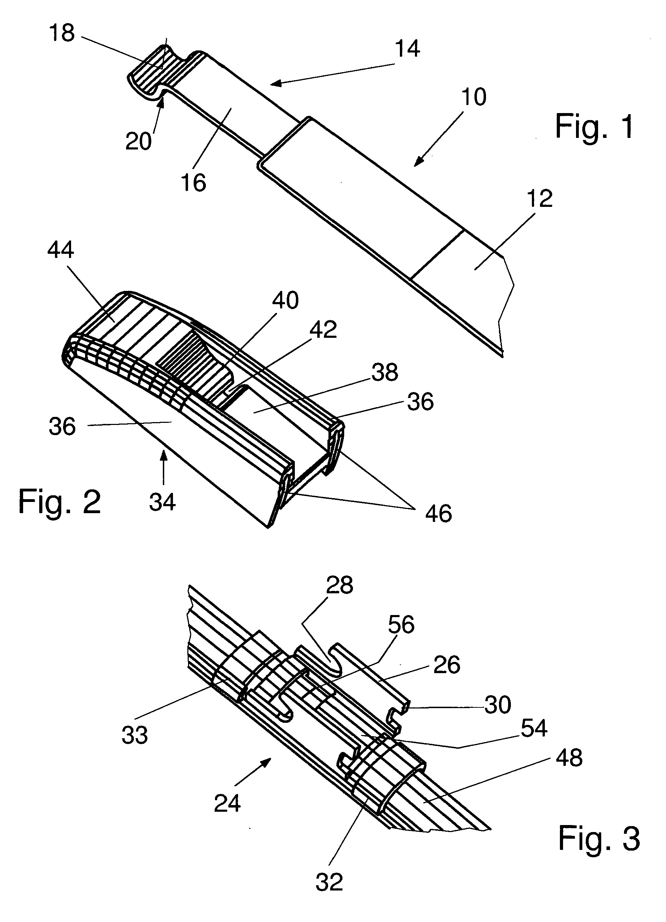

- Fig. 1: eine perspektivische Teilansicht eines Wischarms,
- Fig. 2: eine perspektivische Ansicht einer Adapterkappe,
- Fig. 3: eine perspektivische Teilansicht eines Wischblatts mit einem Anschlusselement,
- Fig. 4: eine Teilansicht auf ein montiertes Wischblatt an einem Wischarm
- Fig. 5: einen Querschnitt entsprechend der Linie V-V in Fig. 4,
- Fig. 6: einen Querschnitt entsprechend der Linien VI-VI in Fig. 4
- Fig. 7: bis Fig. 9 schematische Längsschnitte entsprechend der Linie IX-IX in Fig. 4 in verschiedenen Montagepositionen.

### Beschreibung des Ausführungsbeispiels

Ein Wischblatt 22 ist über eine Anschlussvorrichtung nach dem Toplock-Prinzip gelenkig mit einem Ende eines Wischarms 10 verbunden. Das Wischblatt 22 umfasst eine Wischleiste 48 mit einem Gummiprofil 50 und einer Federschiene 52, die in einem zentralen Längskanal des Gummiprofils 50 angeordnet ist und als flaches, federelastisches, balkenförmiges Tragelement dient. Die Federschiene 52 ist so vorgebogen, dass sie unter der Anpresskraft des Wischarms 10 eine gute Anpressdruckverteilung des Gummiprofils 50 an eine Fahrzeugscheibe 58 erzeugt. Anstelle der zentralen Federschiene 52 können auch zwei Federschienen vorgesehen werden, die in seitliche Nuten des Gummiprofils 50 eingesetzt werden. Ferner können die federelastischen, balkenförmigen Tragelemente auch einen runden Querschnitt aufweisen.

Etwa auf der Mitte der Wischleiste 48 ist die Anschlussvorrichtung 24, 34 befestigt. Diese besitzt im dargestellten Ausführungsbeispiel ein Anschlusselement 24 und eine Adapterkappe 34. Das Anschlusselement 24, auch Blechkralle genannt, wird in der Regel aus Blech gestanzt und gebogen und besitzt an seinen Längsseiten Krallen 32 und 33, mit denen es die Wischleiste 48 im Bereich der Federschiene 52 seitlich umfasst. Die Krallen 32 und/oder 33 werden mit der Federschiene 52 verpresst, sodass das Anschlusselement 24 auf der Wischleiste 48 fixiert ist. Es sind auch andere Befestigungsarten bekannt, bei denen das Anschlusselement 24 durch Kleben, Schweißen, Klemmen oder Klippsen an der Wischleiste 48 befestigt wird. Auch besteht die Möglichkeit, dass das Anschlusselement 24 aus Kunststoff gefertigt ist.

Die Adapterkappe 34 ist in der Regel ein Spritzgussteil aus Kunststoff. Sie besitzt zwei Seitenwände 36, die durch eine Frontwand 44 und eine Decke 38 miteinander verbunden sind. Am antriebsseitigen Ende der Frontwand 44, die bündig mit den Seitenwänden 36 nach oben hin abschließt, schließt sich eine Lagerwalze 40 an, die quer zur Wischleiste 48 und oberhalb von dieser verläuft und mit der benachbarten Stirnwand der Decke 38 eine Öffnung 42 bildet. Im Bereich der Lagerwalze 40 und der Decke 38 stehen die Seitenwände 36 nach außen vor, sodass ihre Innenseiten zur seitlichen Führung des Wischarms 10 dienen. Die Seitenwände 36 der Adapterkappe 34 weisen Längsschlitze 46 auf, in die Seitenwände 26 des Anschlusselements 24 bei der Montage geschoben und durch Ausbuchtungen 28 und Rastzapfen 30 verrastet und gehalten werden. Die Seitenwände 26 sind in Längsrichtung zwischen den Krallen 32 und 33 durch einen Boden 54 miteinander verbunden, der der angrenzenden Querschnittkontur der Wischleiste 48 angepasst ist.

Der Wischarm 10, der als Federbalkenwischarm ausgebildet ist, besitzt einen Federbalken 12, an dessen Ende ein Endstück 14 mit einem vorzugsweise flachen Teil 16 angeformt ist. Anstelle eines Federbalkenwischarms können auch andere Wischarmdesigns treten, die ein entsprechendes Endstück 14 aufweisen. Das freie Ende des Endstücks 14 ist zum Wischblatt 22 hin gekröpft und geht mit einer ausgerundeten Kehle 20 in eine offene Lagerschale 18 über, deren Öffnung im montierten Zustand vom Wischblatt 22 abgewandt ist.

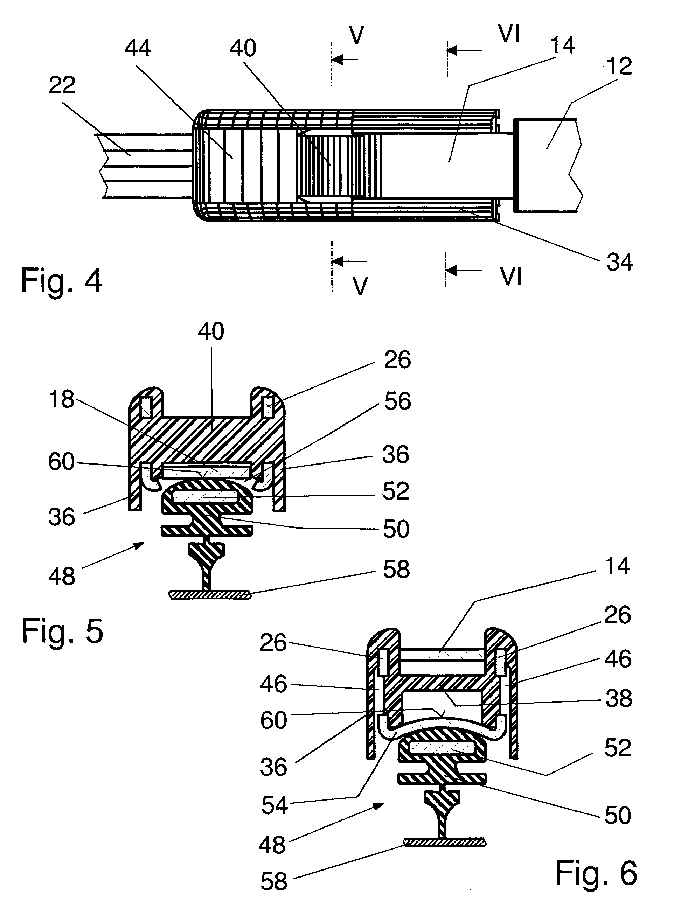

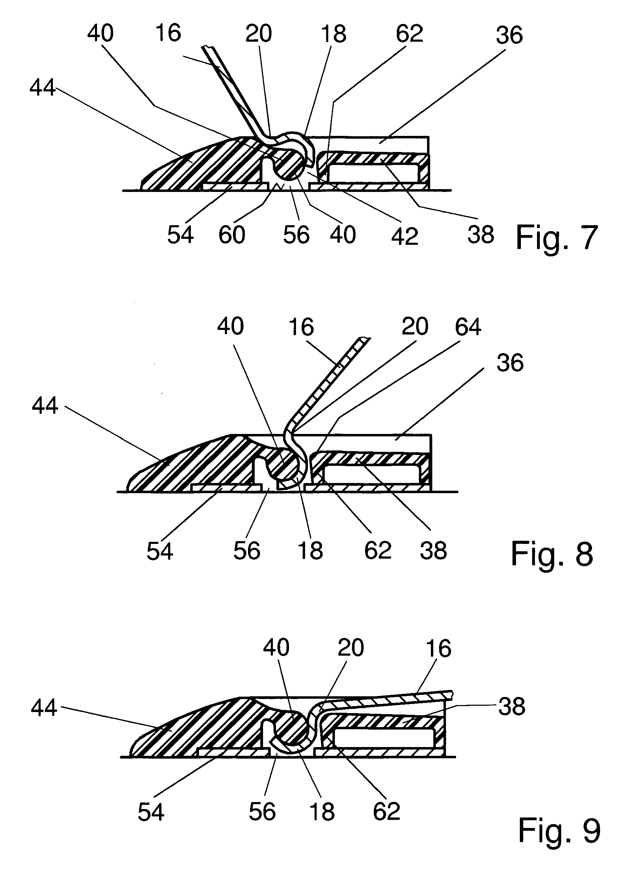

Bei der Montage (Fig. 7 bis Fig. 9) wird die Lagerschale 18 durch die Öffnung 42 der Adapterkappe 34 eingefädelt, indem das Wischblatt 22 entsprechend um die Achse der Lagerwalze 40 geschwenkt wird. Im montierten Zustand umfasst die Lagerschale 18 die Lagerwalze 40 in einem Winkelbereich von maximal 180°, wobei der vorzugsweise flache Teil 16 des Endstücks 14 zwischen den Innenseiten der Seitenwände 36 der Adapterkappe 34 geführt ist. Die Kräfte in Längsrichtung des Wischarms 10 werden über die konkave Innenfläche der Lagerschale 18 auf die Lagerwalze 40 übertragen, während die Anpresskräfte auf das Wischblatt 22 über die konvexe Außenfläche der Lagerschale 18 auf eine Anlagefläche 60 wirken, die in geringem Abstand zur Lagerwalze 40 verläuft und entweder an der Anschlussvorrichtung 24, 34 oder an der Wischleiste 48 angeordnet ist. Im ersten Fall kann ein Teil des Bodens 54 (Fig. 6) oder ein Teil der Adapterkappe 34 als Anlagefläche 60 dienen. Im zweiten Fall besitzen die Adapterkappe 34 und das Anschlusselement 24 im Bereich der Lagerwalze 40 eine Öffnung 56, die bis zur Wischleiste 48 reicht. Die Lagerschale 18 kann sich dann mit ihrer äußeren Oberfläche an der benachbarten Kontur der Wischleiste 48 abstützen. Da diese durch das Gummiprofil 50 gebildet wird, das elastisch nachgeben kann, ist somit eine spielfreie, gedämpfte Kraftübertragung möglich. Außerdem ergibt sich eine besonders flache Bauweise, da durch die Öffnung 56 die Materialstärke des Bodens 54 für den Bauraum der Lagerschale 18 genutzt werden kann.

Wie aus Fig. 7 bis Fig. 9 ersichtlich ist, ist zwischen der Lagerwalze 40 und der Decke 38 die Öffnung 42 ausreichend bemessen, sodass zwischen der äußeren Oberfläche der Lagerschale 18 und der Decke 38 ein ausreichendes Spiel vorhanden ist. Der Bewegungsspielraum zwischen der Decke 38 und dem vorzugsweise flachen Teil 16 des Endstücks 14 des Wischarms 10 wird ferner dadurch verbessert, dass die Decke 38 an der der Kehle 20 zugeordneten Kante 64 der Rundung der Kehle 20 angepasst ist. Die Oberseite der Decke 38 fällt zum antriebsseitigen Ende hin ab, während der der Lagerwalze 40 zugewandte, nach innen gerichtete Schenkel 62 der Decke 38 zur Lagerwalze 40 hin mit der Anlagefläche 60 einen spitzen Winkel bildet.

## Patentansprüche

1. Wischblatt (22) mit einer Wischleiste (48), die aus einem Gummiprofil (50) und mindestens einem balkenförmigen, federelastischen Tragelement (52) aufgebaut ist und auf der mittig eine Anschlussvorrichtung (24, 34) befestigt ist, die am antriebseitigen Ende einer Frontwand (44) auf einer einer Fahrzeugscheibe (58) abgewandten Seite der Wischleiste (48) zwischen zwei Seitenwänden (36) eine Öffnung (42) mit einer quer zur Wischleiste (48) verlaufenden Lagerwalze (40) besitzt, die die Öffnung (42) zum freien Ende des Wischblatts (22) hin begrenzt und im montierten Zustand des Wischblatts (22) von einer offenen Lagerschale (18) teilweise umfasst wird, die an einem vorzugsweise flachen Teil (16) eines Endstücks (14) eines Wischarms (10) angeformt ist, wobei das Endstück (14) zwischen Innenseiten zweier einander gegenüberliegender Wände (36) der Anschlussvorrichtung (24, 34) geführt ist, **dadurch gekennzeichnet, dass** die Anschlussvorrichtung aus einem Anschlusselement (24), das auf der Wischleiste (48) befestigt ist, und einer damit verbundenen Adapterkappe (34) besteht, die die Frontwand (44), die Lager-walze (40) und eine Decke (38) sowie die Seitenwände (36) umfasst, wobei auf der zur Wischleiste (48) gewandten Seite der Lagerwalze (40) im Abstand zu dieser eine Anlagefläche (60) für die äußere Oberfläche der Lagerschale (18) vorgesehen ist.

2. Wischblatt (22) nach Anspruch 1, **dadurch gekennzeichnet, dass** die Anlagefläche (60) an der Anschlussvorrichtung (24, 34) angeordnet ist.

3. Wischblatt (22) nach Anspruch 1, **dadurch gekennzeichnet, dass** die Anschlussvorrichtung (24, 34) in ihrem Boden (54) im Bereich der Lagerwalze (40) eine bis zum Gummiprofil (50) der Wischleiste (48) reichende Öffnung (56) besitzt und die Anlagefläche (60) an dem Gummiprofil (50) vorgesehen ist.

4. Wischblatt (22) nach Anspruch 1, **dadurch gekennzeichnet, dass** in den Seitenwänden (36) der Adapterkappe (34) Längsschlitze (46) vorgesehen sind, die zur antriebseitigen Stirnseite und zur Längsseite offen sind, die der Fahrzeugscheibe (58) zugewandt ist.

5. Wischblatt (22) nach Anspruch 1 oder 4, **dadurch gekennzeichnet, dass** das Anschlusselement (24) an seinen Seitenwänden (26) jeweils eine Ausbuchtung (28) und einen Rastzapfen (30) aufweist, mit denen die Adapterkappe (34) verrastet.

6. Wischblatt (22) nach einem der vorhergehenden Ansprüche, **dadurch gekennzeichnet, dass** die Lagerschale (18) gegenüber dem flachen Teil (16) des Wischarms (10) zur Wischleiste (48) hin gekröpft ist, wobei der Übergang durch eine ausgerundete Kehle (20) gebildet ist.

7. Wischblatt (22) nach einem der vorhergehenden Ansprüche, **dadurch gekennzeichnet, dass** die Oberseite der Decke (38) zur Antriebseite hin leicht abfällt und der nach innen weisende Schenkel (62) der Decke (38) an seiner der Lagerwalze (40) zugewandten Seite einen spitzen Winkel mit der Anlagefläche (60) einschließt.

## Claims

1. A wiper blade (22) with a wiper strip (48) which is constructed from a rubber profile (50) and at least one bar-shaped, spring-elastic supporting element (52) and on which strip there is centrally fastened a connecting device (24, 34) which, on the drive-side end of a front wall (44) on a side of the wiper strip (48) facing away from a vehicle window (58), has, between two side walls (36), an opening (42) with a bearing roller (40) extending transversely with respect to the wiper strip (48), delimiting the opening (42) towards the free end of the wiper blade (22) and, in the mounted state of the wiper blade (22), being at least partially enclosed by an open bearing shell (18) which is integrally formed on a preferably flat part (16) of an end piece (14) of a wiper arm (10), wherein the end piece (14) is guided between inner sides of two mutually opposite walls (36) of the connecting device (24, 34), **characterized in that** the connecting device consists of a connecting element (24), which is fastened on the wiper strip (48), and of an adapter cap (34) connected thereto which comprises the front wall (44), the bearing roller (40) and a cover (30) and also the side walls (36), wherein a bearing face (60) for the outer surface of the bearing shell (18) is provided on the side of the bearing roller (40) facing the wiper strip (48) and at a distance from this roller.

2. Wiper blade (22) according to Claim 1, **characterized in that** the contact face (60) is arranged on the connecting device (24, 34).

3. Wiper blade (22.) according to Claim 1, **characterized in that** the connecting device (24, 34) has in its bottom (54) in the region of the bearing roller (40) an opening (56) which extends up to the rubber profile (50) of the wiper strip (48), and the contact face (60) is provided on the rubber profile (50).

4. Wiper blade (22) according to Claim 1, **characterized in that** longitudinal slots (46) are provided in the side walls (36) of the adapter cap (34) and are open towards the drive-side end face and towards the longitudinal side which faces the vehicle window (58).

5. Wiper blade (22) according to Claim 1 or 4, **characterized in that** the connecting element (24) is provided at its side walls (26) with in each case an indentation (28) and a latching pin (30) by means of which the adapter cap (34) latches.

6. Wiper blade (22) according to one of the preceding claims, **characterized in that** the bearing shell (18) is bent with respect to the flat part (16) of the wiper arm (10) towards the wiper strip (48), wherein the transition is formed by a rounded fillet (20).

7. Wiper blade (22) according to one of the preceding claims, **characterized in that** the upper side of the cover (28) slopes down slightly towards the drive side and the inwardly pointing leg (62) of the cover (38) encloses, at its side facing the bearing roller (40), an acute angle with the contact face (60).

## Revendications

1. Balai d'essuie-glace (22) comprenant une raclette de balai d'essuie-glace (48) qui est constituée d'un profilé en caoutchouc (50) et d'au moins un élément de support (52) élastique à ressort en forme de barre et sur laquelle est fixé de manière centrale un dispositif de raccordement (24, 34) qui possède, à l'extrémité située du côté de l'entraînement d'une paroi avant (44), sur un côté de la raclette de balai d'essuie-glace (48) opposé à une vitre de véhicule (58), entre deux parois latérales (36), une ouverture (42) comprenant un cylindre de palier (40) s'étendant transversalement par rapport à la raclette de balai d'essuie-glace (48), lequel cylindre de palier limite l'ouverture (42) en direction de l'extrémité libre du balai d'essuie-glace (22) et est entouré partiellement par un coussinet de palier ouvert (18) dans l'état monté du balai d'essuie-glace (22), lequel coussinet de palier est formé sur une partie de préférence plane (16) d'une pièce d'extrémité (14) d'un bras d'essuie-glace (10), la pièce d'extrémité (14) étant guidée entre des côtés intérieurs de deux parois (36) se faisant face du dispositif de raccordement (24, 34), **caractérisé en ce que** le dispositif de raccordement est constitué d'un élément de raccordement (24) qui est fixé sur la raclette de balai d'essuie-glace (48) et d'un capuchon adaptateur (34) relié à celle-ci, lequel capuchon adaptateur comporte la paroi avant (44), le cylindre de palier (40) et un recouvrement (38) ainsi que les parois latérales (36), une surface d'appui (60) pour la surface extérieure du coussinet de palier (18) étant prévue du côté du cylindre de palier (40) tourné vers la raclette de balai d'essuie-glace (48), à distance de ce cylindre de palier.

2. Balai d'essuie-glace (22) selon la revendication 1, **caractérisé en ce que** la surface d'appui (60) est disposée sur le dispositif de raccordement (24, 34).

3. Balai d'essuie-glace (22) selon la revendication 1, **caractérisé en ce que** le dispositif de raccordement (24, 34) possède dans son fond (54) dans la région du cylindre de palier (40) une ouverture (56) allant jusqu'au profilé en caoutchouc (50) de la raclette de balai d'essuie-glace (48) et la surface d'appui (60) est prévue sur le profilé en caoutchouc (50).

4. Balai d'essuie-glace (22) selon la revendication 1, **caractérisé en ce que** des fentes longitudinales (46) sont prévues dans les parois latérales (36) du capuchon adaptateur (34), lesquelles fentes longitudinales sont ouvertes en direction du côté frontal situé du côté de l'entraînement et en direction du côté longitudinal qui est tourné vers la vitre du véhicule (58).

5. Balai d'essuie-glace (22) selon la revendication 1 ou 4, **caractérisé en ce que** l'élément de raccordement (24) comprend sur ses parois latérales (26) un bombement (28) et un ergot d'encliquetage (30) respectifs à l'aide desquels le capuchon adaptateur (34) est encliqueté.

6. Balai d'essuie-glace (22) selon l'une quelconque des revendications précédentes, **caractérisé en ce que** le coussinet de palier (18) est courbé en direction de la raclette de balai d'essuie-glace (48) par rapport à la partie plane (16) du bras d'essuie-glace (10), la transition étant formée par un congé arrondi (20).

7. Balai d'essuie-glace (22) selon l'une quelconque des revendications précédentes, **caractérisé en ce que** le côté supérieur du recouvrement (38) est légèrement incliné en direction du côté de l'entraînement et la branche (62), tournée vers l'intérieur, du recouvrement (38) forme sur son côté tourné vers le coussinet de palier (40) un angle aigu avec la surface d'appui (60).
